(19) Europäisches Patentamt
European Patent Office
Office européen des brevets

(11) EP 2 010 777 B1

(12) **EUROPEAN PATENT SPECIFICATION**

(45) Date of publication and mention of the grant of the patent:
**24.02.2010 Bulletin 2010/08**

(21) Application number: **07734378.8**

(22) Date of filing: **24.04.2007**

(51) Int Cl.:
***F02D 41/00*** *(2006.01)*
***F02D 41/18*** *(2006.01)*
***F02B 37/12*** *(2006.01)*
***F04D 27/02*** *(2006.01)*
***F02B 37/16*** *(2006.01)*

(86) International application number:
**PCT/IB2007/001060**

(87) International publication number:
**WO 2007/122499 (01.11.2007 Gazette 2007/44)**

(54) **CONTROL APPARATUS AND CONTROL METHOD FOR INTERNAL COMBUSTION ENGINE HAVING CENTRIFUGAL COMPRESSOR**

STEUERVORRICHTUNG UND STEUERVERFAHREN FÜR EINEN VERBRENNUNGSMOTOR MIT ZENTRIFUGALKOMPRESSOR

APPAREIL DE COMMANDE ET PROCEDE DE COMMANDE POUR MOTEUR A COMBUSTION INTERNE COMPORTANT UN COMPRESSEUR CENTRIFUGE

(84) Designated Contracting States:
**DE FR IT**

(30) Priority: **25.04.2006 JP 2006121086**

(43) Date of publication of application:
**07.01.2009 Bulletin 2009/02**

(73) Proprietor: **Toyota Jidosha Kabushiki Kaisha**
**Toyota-shi, Aichi-ken, 471-8571 (JP)**

(72) Inventor: **TABATA, Masakazu**
**Toyota-shi**
**Aichi-ken 471-8571 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**US-A- 4 749 331**
**US-A- 5 971 712**
**US-A1- 2004 216 457**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 010 777 B1

## Description

BACKGROUND OF THE INVENTION

1. Field of the Invention

The present invention relates to a control apparatus and a control method for an internal combustion engine having a centrifugal compressor.

2. Description of the Related Art

As described in Japanese Patent Application Publication No. 2005-240683 (JP-A-2005-240683), in a conventional exhaust purification system for an internal combustion engine, a turbocharger uses the exhaust energy to drive a centrifugal compressor. The conventional system is designed to detect a surge in the centrifugal compressor based on fluctuations in intake air volume.

If a high-boost, high-powered internal combustion engine has a centrifugal compressor driven by an electric motor, a surge may occur during acceleration. In such an internal combustion engine, when an incipient surge is not detected, it develops and greatly dampens acceleration of the engine.

Thus, incipient surge detection in the centrifugal compressor is required to avoid the occurrence of a severe surge. However, the conventional surge detection method relies on fluctuations in intake air volume or a difference between intake air volumes (first order differential). Generally, an intake air volume sharply increases during acceleration of the internal combustion engine, which can be improperly detected as a surge. Thus, in the conventional method, in order to avoid such improper detection, fluctuations in intake air volume greater than the fluctuations that generally occur during acceleration, are only detected as a surge. Hence, the conventional method suffers from a failure to detect a slight incipient surge.

SUMMARY OF THE INVENTION

The present invention provides a control apparatus and a control method for an internal combustion engine having a centrifugal compressor, which allow more accurate detection of a slight incipient surge.

According to the invention, a control appratus for an internal combustion engine having a centrifugal compressor in an intake passage, the system includes: differential calculating means for calculating a second order differential of at least one of an airflow rate of the centrifugal compressor, and a pressure and a temperature of air in an inlet of the centrifugal compressor; differential determining means for determining whether the second order differential calculated by the differential calculating means is equal to or greater than a predetermined value; and surge determining means for determining whether a surge occurs in the centrifugal compressor if the second order differential is equal to or greater than the predetermined value.

In the control apparatus, preferably the differential determining means determines whether the second order differential calculated by the differential calculating means is equal to or greater than a predetermined value, and the surge determining means determines that a surge occurs in the centrifugal compressor if the second order differential is equal to or greater than the predetermined value.

Further, the control apparatus detects an inflection point of pulsations in the airflow rate of the centrifugal compressor, the pressure or the temperature of air in the inlet of the centrifugal compressor, and also detects large fluctuations in the airflow rate of the centrifugal compressor, or the pressure or the temperature of air in the inlet of the centrifugal compressor, which occur before and after the inflection point. Accordingly, when the airflow rate of the compressor monotonously increases, a small second order differential results. The small value is therefore not used in determining whether a surge occurs. Thus, the determination of whether a surge occurs is made earlier and more accurately.

In the control apparatus, preferably the differential determining means determines whether the second order differential calculated by the differential calculating means is equal to or greater than the predetermined value, and the surge determining means includes storage means for storing a number of times that the differential determining means determines that the second order differential is equal to or greater than the predetermined value, and determines that a surge occurs in the centrifugal compressor when the number of times that the differential determining means determines that the second order differential is equal to or greater than the predetermined value reaches or exceeds a threshold value.

Further, the surge determining means determines that a surge occurs when the number of times that the differential determining means determines that the calculated second order differential is equal to or greater than the predetermined value reaches or exceeds the threshold value, the threshold value is lowered as the value of the calculated second differential increases.

Accordingly, earlier detection of a severe surge is achieved, thereby preventing greatly dampening of the acceleration of the internal combustion engine.

The surge determining means prohibits the determination of whether a surge occurs when at least one of following conditions is satisfied: an opening degree of a throttle valve changes rapidly; the opening degree of the throttle valve is equal to or lower than a predetermined opening degree; a boost pressure of the intake air is equal to or lower than a predetermined boost pressure; the airflow rate of the centrifugal compressor is equal to or greater than a predetermined airflow rate; or an engine speed is equal to or greater than a predetermined engine speed.

Accordingly, the condition where there is no possibility of occurrence of a surge is prevented from being improperly determined as a surge.

The control apparatus further including: a bypass passage that communicably connects an inlet passage and an outlet passage of the centrifugal compressor; a bypass valve that opens or closes the bypass passage; and bypass valve control means for opening the bypass valve when the surge determining means determines that a surge occurs. In addition, the bypass valve control means increases an opening degree of the bypass valve as the calculated second order differential increases.

Accordingly, displacement of the bypass valve is controlled as appropriate to the magnitude of the surge. This prevents the bypass valve from being unnecessarily, excessively displaced in an attempt to avoid the surge, and therefore prevents the internal combustion engine from undesirable operating conditions, which cause poor driveability.

The control apparatus further including: a bypass passage that communicably connects an inlet passage and an outlet passage of the centrifugal compressor; a bypass valve that opens and closes the bypass passage; and bypass valve control means for opening the bypass valve when the surge determining means determines that a surge occurs, and the bypass valve control means opens the bypass valve for a longer duration as the calculated second order differential increases.

Accordingly the duration for which the bypass valve is open is controlled in accordance with the magnitude of the surge. This prevents the bypass valve from being unnecessarily, excessively displaced in an attempt to avoid the surge, and therefore prevents the internal combustion engine from undesirable operating conditions, which cause poor driveability.

Accordingly to the invention, a method for controlling an internal combustion engine having a centrifugal compressor in an intake passage comprising the steps of: calculating a second order differential of at least one of an airflow rate of the centrifugal compressor, and a pressure and a temperature of air in an inlet of the centrifugal compressor; determining whether the calculated second order differential is equal to or greater than a predetermined value; and determining that a surge occurs in the centrifugal compressor if the second order differential is equal to or greater than the predetermined value.

## BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a schematic diagram illustrating a configuration of an embodiment of the invention;

FIG 2 is a graph showing a relationship between a compressor outlet/inlet pressure ratio and an airflow rate Ga of the compressor;

FIGs. 3A and 3B are graphs for describing a method for detecting a surge according to the embodiment of the invention;

FIG 4 is a flowchart of a routine to be executed in the embodiment of the invention;

FIG 5 is a conceptual graph showing the idea of how to determine if a surge occurs according to the embodiment of the invention;

FIG. 6 is a flowchart of a routine to be executed for controlling a bypass valve in FIG 1 in the embodiment of the invention; and

FIGs. 7A and 7B are graphs for showing effects obtained by the method for detecting a surge according to the embodiment of the invention.

## DETAILED DESCRIPTION OF THE PREFERRED EMBODIMENTS

FIG. 1 is a schematic diagram illustrating a configuration of an embodiment of the invention. As shown in FIG. 1, the system has an internal combustion engine 10. An intake system in the internal combustion engine 10 includes an intake manifold 12 and an intake pipe (intake passage) 14 connected to the intake manifold 12. Ambient air is inducted into the intake pipe 14 and distributed to each cylinder through the intake manifold 12.

An air filter 16 is provided at an entrance of the intake pipe 14. An airflow meter 18 is provided adjacent to and downstream of the air filter 16. The airflow meter 18 outputs a signal in response to a flow rate of air drawn by the intake pipe 14. A throttle valve 20 is provided upstream of the intake manifold 12. An intercooler 22 is provided upstream of the throttle valve 20. The intercooler 22 cools compressed air. A boost pressure sensor 24 is located downstream of the intercooler 22. The boost pressure sensor 24 outputs a signal in response to a pressure within the intake pipe 14.

A turbocharger 26 includes a compressor (centrifugal compressor) 26a provided in a midsection of the intake pipe 14 extending from the airflow meter 18 to the intercooler 22. In addition to the compressor 26a, the turbocharger 26 also includes a turbine 26b. The compressor 26a is driven and rotated by the energy of the exhaust gas flowing into the turbine 26b. The compressor 26a is not limited to being driven by the turbine 26b using the exhaust energy, but may be driven by other assisting means, such as an electric motor.

An intake bypass pipe 28 has a first end connected to a midsection of the intake pipe 14 extending from the compressor 26a to the intercooler 22. The intake bypass pipe 28 is a bypass passage that communicably connects an inlet passage and an outlet passage of the compressor 26a. The intake bypass pipe 28 has a second end connected to the intake pipe 14 on the upstream side of the compressor 26a. A bypass valve 30 is located in a midsection of the intake bypass pipe 28. The bypass valve 30 controls the flow rate of air flowing through the intake bypass pipe 28. When the inlet of the intake bypass pipe 28 is opened by operating the bypass valve 30, part of air compressed by the compressor 26a returns toward the inlet of the compressor 26a.

An intake pressure sensor 32 and a temperature sensor 34 are located upstream of the compressor 26a. The intake pressure sensor 32 outputs a signal in response to a pressure within the intake pipe 14. The temperature sensor 34 outputs a signal in response to an air temperature of the inlet of the compressor 26a.

An exhaust system in the internal combustion engine 10 includes an exhaust manifold 36 and an exhaust pipe 38 connected to the exhaust manifold 36. Exhaust gas from each cylinder of the internal combustion engine 10 is collected in the exhaust manifold 36 and discharged through the exhaust manifold 36 to the exhaust pipe 38.

A control system in the internal combustion engine 10 includes an electronic control unit (ECU) 40. The ECU 40 connected to the aforementioned plural types of sensors. In addition, the ECU 40 is also connected to a throttle position sensor 42 and a crank angle sensor 44. The throttle position sensor 42 outputs a signal in response to an opening degree of the throttle valve 20. The crank angle sensor 44 detects an engine speed NE. The ECU 40 also connects to the aforementioned plural types of actuators. Based on the outputs from the respective sensors, the ECU 40 drives the associated actuators in accordance with a given control program.

Now, a surge in the compressor 26a will be described. FIG. 2 is a graph showing a relationship between a compressor 26a outlet/inlet pressure ratio and an airflow rate Ga of the compressor 26a. A thick solid curve in FIG. 2 indicates a surging limit or a surge line. A hatching area on the left from the surge line is equivalent to a surge area. In other words, a surge is more likely to occur under the conditions of a higher-pressure ratio between the inlet and outlet of the compressor 26a and a lower airflow rate Ga of the compressor 26a. More specifically, a surge tends to occur during acceleration with the throttle valve fully-opened.

Should a surge occur during acceleration, opening the bypass valve 30 helps prevent the surge from developing. However, if an incipient surge is not detected, it develops and greatly dampens acceleration of the internal combustion engine 10. In contrast, in case of a slight surge, which corresponds to an area adjacent to the surge line in FIG 2, the relatively small displacement of the bypass valve 30 suffices for preventing such surge from developing. This reduces an adverse effect on the acceleration.

Therefore, the compressor 26a is desirably controlled under the conditions corresponding to the area adjacent to the surge line in FIG 2. In order to achieve this, incipient surge detection is required, that is, detection of a slight surge, which causes small-amplitude pulsations in the airflow rate Ga of the compressor 26a. Thus, the system according to the embodiment of the invention detects a surge based on a second order differential of the airflow rate of the compressor in order to detect a relatively slight incipient surge more accurately than conventional systems.

FIGs. 3A and 3B are graphs for describing a method for detecting a surge according to the embodiment of the invention. More specifically, FIG 3A is a graph illustrating pulsations in the airflow rate Ga of the compressor 26a, which are caused due to the surge in the compressor 26a, in an enlarged manner. FIG 3B is a graph for describing a specific process for detecting a surge.

The method for detecting a surge according to the embodiment of the invention relies on the second order differential of the airflow rate Ga of the compressor. The method includes detecting an inflection point (circled in FIG 3A) on the pulsation curve of the airflow rate Ga of the compressor. The method determines that a surge occurs if large fluctuations in airflow rate Ga of the compressor are found before and after the inflection point.

More specifically, as shown in FIG 3B, the ECU 40 calculates the difference between a current measured value (plots in FIG 3B) and a previously measured value of the airflow rate Ga of the compressor at predetermined sampling intervals (i.e. a first order differential ($\partial Ga/\partial t$) of the airflow rate Ga of the compressor on the time series). Then, the ECU 40 calculates the difference between the obtained current first order differential and the previous first order differential (i.e. a second order differential ($\partial^2 Ga/\partial t^2$)). If the calculated second order differential is equal to or greater than a predetermined value, the ECU 40 determines that a surge occurs.

The first order differentials are of opposite sign before and after the inflection point, where the airflow rate Ga of the compressor changes from increase to decrease or from decrease to increase. Thus, the first order differentials reverse in sign, resulting in a large second order differential, that is, a large difference between these first order differentials. In contrast, when the airflow rate Ga of the compressor monotonously increases or decreases, fluctuations in airflow rate Ga of the compressor are large. Accordingly, the resultant first order differentials are large. Therefore, the second order differential, that is a difference between these large first order differentials, is not as large as the value obtained from the first order differentials of opposite sign.

As described above, the method for detecting a surge according to the embodiment of the invention, which uses a second order differential, allows more accurate detection of large fluctuations in airflow rate Ga of the compressor before and after the inflection point on the pulsation curve. This enables more accurate detection of an incipient surge regardless of the magnitude of the surge (pulsations). In this embodiment, the difference between adjacent measured values of the airflow rate Ga of the compressor is calculated to obtain a second order differential. However, the invention is not limited to this manner. Alternatively, a higher-order equation shown below as (1) may be used to obtain a more precise second order differential.

$$\text{Second order differential} = (-Ga1 + 16Ga2 - 30Ga3 + 16Ga4 - Ga5)/12\Delta t^2 \ldots (1),$$

where Gal to Ga5 represent measured values of the airflow rate Ga of the compressor, respectively. Gal indicates the current measured value. Increases in the number after Ga indicate older values.

FIG. 4 is a flowchart of a routine that is executed by the ECU 40 to achieve the aforementioned functions according to the embodiment of the invention. The ECU 40 executes this routine periodically at predetermined sampling intervals. In the routine shown in FIG. 4, first the airflow rate Ga of the compressor 26a is acquired based on a signal output from the airflow meter 18 (step S100).

Then, the measured airflow rate Ga of the compressor, which is acquired in step S100, is set as the current value Gal. Accordingly, the prior current value Gal and previous value Ga2 are set as the previous value Ga2 and the second previous value Ga3, respectively (step S102).

Then, the ECU 40 determines whether the current operating conditions of the internal combustion engine 10 are appropriate for determining whether a surge occurs (step S104). More specifically, in step S104, if any of the following conditions is satisfied, a determination of whether a surge occurs is prohibited. The conditions are that: the throttle opening degree changes rapidly; the throttle opening degree is equal to or lower than a predetermined opening degree; the boost pressure is equal to or lower than a predetermined boost pressure; the airflow rate Ga of the compressor 26a is equal to or greater than a predetermined airflow rate; and the engine speed NE is equal to or greater than a predetermined engine speed.

In step S 104, if at least one of the conditions is satisfied, which indicates that there is a possibility of improper surge determination or there is no possibility a surge would occur, the ECU 40 determines that no surge occurs, and resets a counter value (step S106).

In contrast, in step S104, if none of the aforementioned conditions are satisfied, the ECU 40 determines that the operating conditions of the internal combustion engine 10 are appropriate to determine whether surge occurs. Then, a second order differential of the airflow rate Ga of the compressor 26a is calculated in accordance with the method described above (step S108).

Then, the ECU 40 determines whether the second order differential calculated in step S108 is equal to or greater than a predetermined value (step S110). If the determination result shows that the second order differential is equal to or greater than the predetermined value, the counter value for determining that the surge occurs is increased by a value corresponding to the second order differential (step S112).

In this routine, the ECU 40 is ultimately determines whether a surge occurs in accordance with the relationship between the value of the calculated second order differential and the number of times that the second order differential is determined to be equal to or greater than the predetermined value in step S110. FIG 5 is a conceptual graph showing how to determine if a surge occurs. Based on the idea shown in FIG. 5, the ECU 40 determines that the surge occurs, when the number of times the calculated second order differential is determined to be equal to or greater than a predetermined value reaches or exceeds a given value. The given value is reduced as a calculated second order differential increases. This idea is embodied by the process in steps S110 to S118.

In step S112, as shown in FIG 5, the calculated second order differential is categorized into one of three levels 1 to 3. To be more specific, in step S110, the ECU 40 determines whether the calculated second order differential is equal to or greater than the level 1. Then, in step S 112, this second order differential is identified as any of the levels 1 to 3. As the level of the second order differential increases (closer to the level 3), the counter value is increased by a larger number in step S 112. For example, in the case of the second order differential at the level 1, the counter value is increased by 1. Likewise, in the case of the second order differential at the level 2 and 3, the counter value is increased by 2 and 3, respectively.

In contrast, in step S 110, if the second order differential is determined to be below the predetermined value, the counter value is decreased by 1. When the current counter value is 0, it remains unchanged (step S114).

Then, the ECU 40 determines whether the counter value is equal to or greater than a predetermined value (step S 116). If the determination result shows that the counter value is below the predetermined value, the ECU determines that no surge occurs (step S106). In contrast, if the counter value is equal to or greater than the predetermined value, the ECU ultimately determines that a surge occurs (step S118).

FIG. 6 is a flowchart of a routine to be executed by the ECU 40 for controlling the bypass valve 30 in FIG 1. In the routine shown in FIG. 6, the ECU 40 determines whether or not a surge occurs in the compressor 26a (step S200). The surge detection is achieved by means of the routine shown in FIG. 4.

In step S200, if the ECU 40 determines that no surge occurs, the bypass valve 30 is kept fully closed (step S202). In contrast, if the ECU 40 determines that a surge occurs in step S200, the bypass valve 30 is opened (step S204). In step S204, as shown in FIG 5, as the second order differential, used when determining that a surge occurs, increases, the bypass valve 30 is controlled such that it is opened more widely. More specifically, as a mean value of the second order differentials, which have been obtained by the time a surge is determined to occur (see step S110), increases, the bypass valve 30 is controlled such that it is opened more widely. It is noted that the invention is not limited to such manner. Alternatively, the bypass valve 30 may be opened to a constant degree for a longer duration as the calculated second order differential increases.

In accordance with the process shown in FIG. 6, when the internal combustion engine 10 is operating under conditions that tend to induce a surge in the compressor 26a, part of air compressed by the compressor 26a returns toward the inlet of the compressor 26a through the intake bypass pipe 28. This decreases the pressure ratio between the inlet and outlet of the compressor, as well as in an increase in airflow rate Ga of the compressor. Thereby, the surge is minimized.

FIGs. 7A and 7B are graphs for showing effects obtained by the method for detecting a surge according to the embodiment of the invention. More specifically, FIG. 7A shows a waveform of fluctuations in airflow rate Ga of the compressor 26a during acceleration. Also, FIG 7B shows a waveform of fluctuations in second order differential of the airflow rate Ga of the compressors, which is calculated in sequence.

In the aforementioned system according to the embodiment of the invention, if a second order differential of the airflow rate Ga of the compressor 26a is equal to or greater than a predetermined value, the ECU 40 determines that a surge occurs. In accordance with the conventional method, whether a surge occurs is determined based on the fluctuations in intake air volume (first order differential). Thus, a monotone increase in intake air volume during acceleration can be improperly determined as a surge condition. To prevent such improper determination, a larger predetermined value is necessary. This results in a failure to detect a surge that produces relatively slight pulsations.

In contrast, as shown in FIG. 7A, the method according to the embodiment of the invention includes detecting the inflection points on the pulsation curve of the airflow rate Ga of the compressor 26a. Also, the method includes detecting large fluctuations in airflow rate Ga of the compressor, which occur before and after the respective inflection points. Further, in accordance with this method, when the airflow rate Ga of the compressor 26a monotonously increases, a small second order differential results. The small value is therefore not used for determining if a surge occurs. Thus, whether or not a surge occurs is determined earlier and more accurately.

The method according to the embodiment of the invention includes prohibiting the surge determination, if the throttle opening degree varies rapidly (see time t0 in FIGs. 7A and 7B). Thus, even when the second order differential increases, which results from the sharp increase in throttle opening degree, this value is prevented from being improperly determined as a surge condition.

The method according to the embodiment of the invention further includes prohibiting the surge determination, if the throttle opening degree is equal to or lower than a predetermined opening degree. Thus, an improper surge determination is avoided in the case where the volume of exhaust gas supplied to the turbine 26b is too small to raise the boost pressure sufficiently, resulting in no possibility of occurrence of a surge. In addition, if the boost pressure is equal to or lower than a predetermined boost pressure, the surge determination is prohibited. Therefore, an improper surge determination is avoided in the case where the boost pressure is so low that no surge can occur.

The method according to the embodiment of the invention prohibits the surge determination if the airflow rate Ga of the compressor 26a and the engine speed NE are equal to or greater than respective predetermined values. As seen from the relationship in FIG. 2, no surge occurs when the airflow rate Ga of the compressor 26a and the engine speed NE are equal to or greater than the respective predetermined values. Therefore, in such a case, the surge determination is prohibited to avoid an improper determination.

In accordance with the conventional manner, whether or not a surge occurs is determined based on the difference between the intake air volumes Ga (first order differential). Thus, in order to prevent an improper determination, once a monotonous increase in intake air volume Ga has been detected, the measurement thereof should last for a certain duration. In contrast, the method according to the embodiment of the invention,
in which the routine shown in FIG. 4 is executed, only requires three real-time measured values to be stored. In turn, the alternative method, which uses the aforementioned equation (1) to obtain a second order differential, only requires six real-time measured values. Thus, relative to the conventional manner, the method according to the embodiment of the invention results in a reduction in load on a memory in the ECU 40.

In the method in accordance with the routine shown in FIG. 4, the level of the calculated second order differential is identified a required number of times for the ECU to ultimately determine that a surge occurs. This required number of times to execute the level identification varies depending on the level of the second order differential. This method allows incipient detection of a severe surge, and therefore prevents greatly dampening of the acceleration of the internal combustion engine 10.

In the method in accordance with the routine shown in FIG. 6, the bypass valve 30 is controlled after the detection of a surge. The displacement of the bypass valve 30 varies depending on the level of the calculated second order differential. A principal reason for detecting and avoiding a surge is to prevent the driveability from being impaired by the surge which adversely affects the operating conditions of the internal combustion engine 10. If the bypass valve 30 is controlled such that it is opened to a constant degree independent of the magnitude of the detected surge. Then, to avoid even a relatively slight surge, the bypass valve 30 is unnecessarily, excessively displaced. This undesirably results in insufficient air supply to the internal combustion engine 10, causing poor driveability. The method according to the embodiment of the invention overcomes such drawback.

The centrifugal compressor 26a may be incorporated in a generator operated occasionally with a constant airflow rate Ga of the compressor 26a. In this case, the mean value of the airflow rates Ga of the compressor, which are obtained for a certain duration, may be calculated. Then, a difference from the mean value may be detected as pulsations, which are taken into account to determine if a surge occurs. However, such manner may not be suitable for a centrifugal compressor to be applied to the internal combustion engine in which the airflow rate of the compressor continues to fluctuate depending on the engine operating conditions. In contrast, the method for detecting a surge according to the embodiment of the invention allows incipient and accurate surge detection in the internal combustion engine having the above characteristics.

In the aforementioned embodiment, if the second order differential of the airflow rate Ga of the compressor 26a is equal to or greater than a predetermined value, the ECU 40 determines if a surge occurs. However, the invention is not limited to that. Alternatively, a second order differential of any parameters may be used as long as the parameter varies according to the operating conditions of the centrifugal compressor, such as pressure and temperature of the air present at the compressor inlet.

Also, in the aforementioned embodiment of the invention, the second order differential of the airflow rate Ga of the compressor 26a is calculated at predetermined sampling intervals to compare each calculated value with the predetermined value. However, the invention is not limited to that. Alternatively, a difference between the airflow rates Ga of the compressor (first order differential) may be calculated in sequence to detect whether or not the first order differentials change sign. Then, upon detection that the first order differentials change sign, the second order differential, calculated based on the first order differentials before and after the inflection point, may be compared with a predetermined value.

According to the aforementioned embodiment of the invention, the ECU 40 functions as "differential calculating means," described in the claims, in step S108. Also, the ECU 40 functions as "a differential determining means," described in the claims, in step S 110. Further, the ECU 40 functions as "surge determining means," described in the claims, in steps S 112 to 118. Furthermore, the ECU 40 functions as "storage means," described in the claims, in steps S112 and S114. Still furthermore, the ECU 40 functions as "bypass valve control means," described in the claims, in steps S202 and S204.

## Claims

1. A control apparatus for an internal combustion engine (10) having a centrifugal compressor (26a) in an intake passage (14), **characterized by** comprising:

differential calculating means for calculating a second order differential of at least one of an airflow rate of the centrifugal compressor (26a), and a pressure and a temperature of air in an inlet of the centrifugal compressor (26a);
differential determining means for determining whether the second order differential calculated by the differential calculating means is equal to or greater than a predetermined value; and
surge determining means for determining whether a surge occurs in the centrifugal compressor (26a), wherein the surge determining means determines that a surge occurs in the centrifugal compressor (26a) if the second order differential is equal to or greater than the predetermined value.

**2.** The control apparatus according to claim 1, wherein the differential determining means determines whether the second order differential calculated by the differential calculating means is equal to or greater than a predetermined value, and

the surge determining means comprises a storage means for storing a number of times that the differential determining means determines that the second order differential is equal to or greater than the predetermined value, and determines that a surge occurs in the centrifugal compressor (26a) when the number of times that the differential determining means determines that the second order differential is equal to or greater than the predetermined value reaches or exceeds a threshold value.

**3.** The control apparatus according to claim 2, wherein the surge determining means determines that a surge occurs when the number of times that the differential determining means determines that the calculated second order differential is equal to or greater than the predetermined value reaches or exceeds the threshold value, the threshold value is lowered as the value of the calculated second order differential increases.

**4.** The control apparatus according to any one of claim 1 to 3, wherein the surge determining means prohibits the determination of whether a surge occurs when at least one of following conditions is satisfied: an opening degree of a throttle valve (20) changes rapidly; the opening degree of the throttle valve (20) is equal to or lower than a predetermined opening degree; a boost pressure of the intake air is equal to or lower than a predetermined boost pressure; the airflow rate of the centrifugal compressor (26a) is equal to or greater than a predetermined airflow rate; and an engine speed is equal to or greater than a predetermined engine speed.

**5.** The control apparatus according to any one of claims 1 to 4, further comprising:

a bypass passage (28) that communicably connects an inlet passage and an outlet passage of the centrifugal compressor (26a);
a bypass valve (30) that opens and closes the bypass passage (28); and
bypass valve control means for opening the bypass valve (30) when the surge determining means determines that a surge occurs, and the bypass valve control means increases an opening degree of the bypass valve (30) as the calculated second order differential increases.

**6.** The control apparatus according to any one of claims 1 to 4, further comprising:

a bypass passage (28) that communicably connects an inlet passage and an outlet passage of the centrifugal compressor (26a);
a bypass valve (30) that opens and closes the bypass passage (28); and
bypass valve control means for opening the bypass valve (30) when the surge determining means determines that a surge occurs, and the bypass valve control means opens the bypass valve (30) for a longer duration as the calculated second order differential increases.

**7.** A method for controlling an internal combustion engine (10) having a centrifugal compressor (26a) in an intake passage (14), comprising:

calculating a second order differential of at least one of an airflow rate of the centrifugal compressor (26a), and a pressure and a temperature of air in an inlet of the centrifugal compressor (26a);
determining whether the calculated second order differential is equal to or greater than a predetermined value; and
determining that a surge occurs in the centrifugal compressor (26a) if the second order differential is equal to or greater than the predetermined value.

**8.** The method according to claim 7, wherein a number of times that the calculated second order differential is determined to be equal to or greater than the predetermined value is stored, and it is determined that a surge occurs in the centrifugal compressor (26a) if the number of times that the calculated second order differential is determined to be equal to or greater than the predetermined value reaches or exceeds a threshold value.

9. The method according to claim 8, wherein it is determined that a surge occurs when the number of times that the calculated second order differential is equal to or greater than the predetermined value reaches or exceeds the threshold value, the threshold value is lowered as the value of the calculated second order differential increases.

10. The method according to any one of claim 7 to 9, wherein the determination of whether a surge occurs is prohibited when at least one of following conditions is satisfied: an opening degree of a throttle valve (20) changes rapidly; the opening degree of the throttle valve (20) is equal to or lower than a predetermined opening degree; a boost pressure of the intake air is equal to or lower than a predetermined boost pressure; the airflow rate of the centrifugal compressor (26a) is equal to or greater than a predetermined airflow rate; and an engine speed is equal to or greater than a predetermined engine speed.

11. The method for controlling an internal combustion engine (10) having a centrifugal compressor (26a), a bypass passage (28) that communicably connects an inlet passage and an outlet passage of the centrifugal compressor (26a), and a bypass valve (30) that opens and closes the bypass passage (28) according to any one of claim 7 to 10, further comprising:

   increasing an opening degree of the bypass valve (30) as the calculated second order differential increases, when it is determined that a surge occurs.

12. The method for controlling an internal combustion engine (10) having a centrifugal compressor (26a), a bypass passage (28) that communicably connects an inlet passage and an outlet passage of the centrifugal compressor (26a), and a bypass valve (30) that opens and closes the bypass passage (28) according to any one of claim 7 to 10, further comprising:

   opening a bypass valve (30) for a longer duration as the calculated second order differential increases, when it is determined that a surge occurs.

## Patentansprüche

1. Steuervorrichtung für einen Verbrennungsmotor (10) mit einem Kreiselverdichter (26a) in einem Einlasskanal (14), **dadurch gekennzeichnet, dass** sie aufweist:

   ein Differentialberechnungsmittel zur Berechnung eines Differentials zweiter Ordnung für einen Luftdurchsatz des Kreiselverdichters (26a) und/oder für einen Druck und eine Temperatur der Luft in einem Einlass des Kreiselverdichters (26a);
   ein Differentialbestimmungsmittel zur Bestimmung, ob das von dem Differentialberechnungsmittel errechnete Differential zweiter Ordnung bei oder über einem vorgegebenen Wert liegt; und
   ein Pumpbestimmungsmittel zur Bestimmung, ob in dem Kreiselverdichter (26a) ein Pumpen stattfindet, wobei das Pumpbestimmungsmittel bestimmt, dass in dem Kreiselverdichter (26a) ein Pumpen stattfindet, wenn das Differential zweiter Ordnung bei oder über dem vorgegebenen Wert liegt.

2. Steuervorrichtung nach Anspruch 1, wobei das Differentialbestimmungsmittel bestimmt, ob das vom Differentialberechnungsmittel errechnete Differential zweiter Ordnung bei oder über einem vorgegebenen Wert liegt, und wobei das Pumpbestimmungsmittel ein Speichermittel aufweist, um die Häufigkeit zu speichern, mit der das Differentialbestimmungsmittel bestimmt, dass das Differential zweiter Ordnung bei oder über dem vorgegebenen Wert liegt, und bestimmt, dass in dem Kreiselverdichter (26a) ein Pumpen stattfindet, wenn die Häufigkeit, mit der das Differentialbestimmungsmittel bestimmt, dass das Differential zweiter Ordnung bei oder über dem vorgegebenen Wert liegt, einen Schwellenwert erreicht oder überschreitet.

3. Steuervorrichtung nach Anspruch 2, wobei das Pumpbestimmungsmittel bestimmt, dass ein Pumpen stattfindet, wenn die Häufigkeit, mit der das Differentialbestimmungsmittel bestimmt, dass das Differential zweiter Ordnung bei oder über dem vorgegebenen Wert liegt, den Schwellenwert erreicht oder überschreitet, wobei der Schwellenwert umso niedriger wird, je höher der Wert des errechneten Differentials zweiter Ordnung wird.

4. Steuervorrichtung nach einem der Ansprüche 1 bis 3, wobei das Pumpbestimmungsmittel die Bestimmung, ob ein Pumpen stattfindet, verhindert, wenn mindestens eine der folgenden Bedingungen erfüllt ist: ein Öffnungsgrad einer Drosselklappe (20) ändert sich schnell; der Öffnungsgrad der Drosselklappe (20) ist höchstens so groß wie ein vorgegebener Öffnungsgrad; ein Ladedruck der angesaugten Luft ist höchstens so groß wie ein vorgegebener Ladedruck; der Luftdurchsatz des Kreiselverdichters (26a) ist mindestens so hoch wie ein vorgegebener Luftdurchsatz; und eine Motordrehzahl ist mindestens so hoch wie eine vorgegebene Motordrehzahl.

**5.** Steuervorrichtung nach einem der Ansprüche 1 bis 4, ferner aufweisend:

einen Umgehungskanal (28), der einen Einlasskanal und einen Auslasskanal des Kreiselverdichters (26a) wirkmäßig verbindet;
ein Umgehungsventil (30), das den Umgehungskanal (28) öffnet und schließt; und
ein Umgehungsventil-Steuermittel zum Öffnen des Umgehungsventils (30) wenn das Pumpbestimmungsmittel bestimmt, dass ein Pumpen stattfindet, wobei das Umgehungsventil-Steuermittel einen Öffnungsgrad des Umgehungsventils (30) umso größer macht, je größer das errechnete Differential zweiter Ordnung wird.

**6.** Steuervorrichtung nach einem der Ansprüche 1 bis 4, ferner aufweisend:

einen Umgehungskanal (28), der einen Einlasskanal und einen Auslasskanal des Kreiselverdichters (26a) wirkmäßig verbindet;
ein Umgehungsventil (30) das den Umgehungskanal (28) öffnet und schließt; und
ein Umgehungsventil-Steuermittel zum Öffnen des Umgehungsventils (30), wenn das Pumpbestimmungsmittel bestimmt, dass ein Pumpen stattfindet, wobei das Umgehungsventil-Steuermittel das Umgehungsventil (30) umso länger öffnet, je größer das errechnete Differential zweiter Ordnung wird.

**7.** Verfahren zum Steuern eines Verbrennungsmotors (10) mit einem Kreiselverdichter (26a) in einem Einlasskanal (14), umfassend:

Berechnen eines Differentials zweiter Ordnung für einen Luftdurchsatz des Kreiselverdichters (26a) und/oder für einen Druck und eine Temperatur der Luft in einem Einlass des Kreiselverdichters (26a);
Bestimmen, ob das errechnete Differential zweiter Ordnung bei oder über einem vorgegebenen Wert liegt; und
Bestimmen, dass in dem Kreiselverdichter (26a) ein Pumpen stattfindet, wenn das Differential zweiter Ordnung bei oder über dem vorgegebenen Wert liegt.

**8.** Verfahren nach Anspruch 7, wobei die Häufigkeit, mit der bestimmt wird, dass das errechnete Differential zweiter Ordnung bei oder über dem vorgegebenen Wert liegt, gespeichert wird, und bestimmt wird, dass in dem Kreiselverdichter (26a) ein Pumpen stattfindet, falls die Häufigkeit, mit der bestimmt wird, dass das errechnete Differential zweiter Ordnung bei oder über dem vorgegebenen Wert liegt, einen Schwellenwert erreicht oder überschreitet.

**9.** Verfahren nach Anspruch 8, wobei bestimmt wird, dass ein Pumpen stattfindet, wenn die Häufigkeit, mit der das errechnete Differential zweiter Ordnung bei oder über dem vorgegebenen Wert liegt, den Schwellenwert erreicht oder überschreitet, wobei der Schwellenwert umso niedriger wird, je höher der Wert des errechneten Differentials zweiter Ordnung wird.

**10.** Verfahren nach einem der Ansprüche 7 bis 9, wobei die Bestimmung darüber, ob ein Pumpen stattfindet, verhindert wird, wenn mindestens eine der folgenden Bedingungen erfüllt ist: ein Öffnungsgrad einer Drosselklappe (20) ändert sich schnell; der Öffnungsgrad der Drosselklappe (20) ist höchstens so groß wie ein vorgegebener Öffnungsgrad; ein Ladedruck der angesaugten Luft ist höchstens so groß wie ein vorgegebener Ladedruck; der Luftdurchsatz des Kreiselverdichters (26a) ist mindestens so hoch wie ein vorgegebener Luftdurchsatz; und eine Motordrehzahl ist mindestens so hoch wie eine vorgegebene Motordrehzahl.

**11.** Verfahren zum Steuern eines Verbrennungsmotors (10) mit einem Kreiselverdichter (26a), einem Umgehungskanal (28), der einen Einlasskanal und eines Auslasskanal des Kreiselverdichters (26a) wirkmäßig verbindet, und einem Umgehungsventil (30), das den Umgehungskanal (28) öffnet und schließt, nach einem der Ansprüche 7 bis 10, ferner umfassend:

Vergrößern eines Öffnungsgrads des Umgehungsventils (30) umso mehr, je höher das errechnete Differential zweiter Ordnung wird, wenn bestimmt wird, dass ein Pumpen stattfindet.

**12.** Verfahren zum Steuern eines Verbrennungsmotors (10) mit einem Kreiselverdichter (26a), einem Umgehungskanal (28), der einen Einlasskanal und eines Auslasskanal des Kreiselverdichters (26a) wirkmäßig verbindet, und einem Umgehungsventil (30), das den Umgehungskanal (28) öffnet und schließt, nach einem der Ansprüche 7 bis 10, ferner umfassend:

Verlängern der Öffnungsdauer eines Umgehungsventils (30) umso mehr, je höher das errechnete Differential zweiter Ordnung wird, wenn bestimmt wird, dass ein Pumpen stattfindet.

**Revendications**

1. Appareil de commande pour un moteur à combustion interne (10) ayant un compresseur centrifuge (26a) dans un passage d'admission (14), **caractérisé par** le fait de comprendre :

   un moyen de calcul de différentiel qui sert à calculer un différentiel de deuxième ordre d'au moins l'un d'un débit d'air du compresseur centrifuge (26a), et d'une pression et température de l'air dans un orifice d'entrée du compresseur centrifuge (26a);
   un moyen de détermination de différentiel destiné à déterminer si le différentiel de deuxième ordre calculé par le moyen de calcul de différentiel est supérieur ou égal à une valeur prédéterminée; et
   un moyen de détermination de surpression destiné à déterminer si une surpression se produit dans le compresseur centrifuge (26a), dans lequel le moyen de détermination de surpression détermine qu'une surpression se produit dans le compresseur centrifuge (26a) si le différentiel de deuxième ordre est supérieur ou égal à la valeur prédéterminée.

2. Appareil de commande selon la revendication 1, dans lequel le moyen de détermination de différentiel détermine si le différentiel de deuxième ordre calculé par le moyen de calcul de différentiel est supérieur ou égal à une valeur prédéterminée, et
   le moyen de détermination de surpression comprend un moyen de stockage qui stocke le nombre de fois où le moyen de détermination de différentiel détermine que le différentiel de deuxième ordre est supérieur ou égal à la valeur prédéterminée, et détermine qu'une surpression se produit dans le compresseur centrifuge (26a) lorsque le nombre de fois où le moyen de détermination de différentiel détermine que le différentiel de deuxième ordre est supérieur ou égal à la valeur prédéterminée atteint ou dépasse une valeur seuil.

3. Appareil de commande selon la revendication 2, dans lequel le moyen de détermination de surpression détermine qu'une surpression se produit lorsque le nombre de fois où le moyen de détermination de différentiel détermine que le différentiel de deuxième ordre calculé est supérieur ou égal à la valeur prédéterminée atteint ou dépasse la valeur seuil, la valeur seuil est réduite à mesure que la valeur du différentiel de deuxième ordre calculé augmente.

4. Appareil de commande selon l'une quelconque des revendications 1 à 3, dans lequel le moyen de détermination de surpression empêche que l'on détermine si une surpression se produit lorsqu'au moins l'une des conditions suivantes est satisfaite : un degré d'ouverture d'un papillon des gaz (20) change rapidement; le degré d'ouverture du papillon des gaz (20) est inférieur ou égala à ou degré d'ouverture prédéterminée; une pression de suralimentation de l'air d'admission est inférieure ou égale à une pression de suralimentation prédéterminée; le débit d'air du compresseur centrifuge (26a) est supérieur ou égal à un débit d'air prédéterminé; et une vitesse moteur est supérieure ou égale à une vitesse moteur prédéterminée.

5. Appareil de commande selon l'une quelconque des revendications 1 à 4, comprenant en plus :

   un passage de dérivation (28) qui relie par communication un passage d'entrée et un passage de sortie du compresseur centrifuge (26a);
   une soupape de dérivation (30) qui ouvre et ferme le passage de dérivation (28);
   et
   un moyen de commande de la soupape de dérivation qui sert à ouvrir la soupape de dérivation (30) lorsque le moyen de détermination de surpression détermine qu'une surpression se produit, et le moyen de commande de la soupape de dérivation augmente un degré d'ouverture de la soupape de dérivation (30) à mesure que le différentiel de deuxième ordre calculé augmente.

6. Appareil de commande selon l'une quelconque des revendications 1 à 4, comprenant en plus :

   un passage de dérivation (28) qui relie par communication un passage d'entrée et un passage de sortie du compresseur centrifuge (26a);
une soupape de dérivation (30) qui ouvre et ferme le passage de dérivation (28); et
un moyen de commande de la soupape de dérivation qui sert à ouvrir la soupape de dérivation (30) lorsque le moyen de détermination de surpression détermine qu'une surpression se produit, et le moyen de commande de la soupape de dérivation ouvre la soupape de dérivation (30) pendant plus de temps à mesure que le différentiel de deuxième ordre calculé augmente.

**7.** Procédé pour commander un moteur à combustion interne (10) ayant un compresseur centrifuge (26a) dans un passage d'admission (14), comprenant le fait de :

calculer un différentiel de deuxième ordre d'au moins l'un d'un débit d'air du compresseur centrifuge (26a), et d'une pression et température d'air dans un orifice d'entrée du compresseur centrifuge (26a);
déterminer si le différentiel de deuxième ordre calculé est supérieur ou égal à une valeur prédéterminée; et
déterminer qu'une surpression se produit dans le compresseur centrifuge (26a) si le différentiel de deuxième ordre est supérieur ou égal à la valeur prédéterminée.

**8.** Procédé selon la revendication 7, dans lequel l'on stocke le nombre de fois où le différentiel de deuxième ordre calculé est déterminé comme étant supérieur ou égal à la valeur prédéterminé, et l'on détermine qu'une surpression se produit dans le compresseur centrifuge (26a) si le nombre de fois où le différentiel de deuxième ordre calculé est déterminé comme étant supérieur ou égal à la valeur prédéterminée atteint ou dépasse une valeur seuil.

**9.** Procédé selon la revendication 8, dans lequel l'on détermine qu'une surpression se produit lorsque le nombre de fois où le différentiel de deuxième ordre calculé est supérieur ou égal à la valeur prédéterminée atteint ou dépasse la valeur seuil, la valeur seuil est réduite à mesure que le différentiel de deuxième ordre calculé augmente.

**10.** Procédé selon l'une quelconque des revendications 7 à 9, dans lequel la détermination qu'une surpression se produit est empêchée lorsqu'au moins l'une des conditions suivantes est satisfaite : un degré d'ouverture d'un papillon des gaz (20) change rapidement; le degré d'ouverture du papillon des gaz (20) est inférieur ou égal à un degré d'ouverture prédéterminé; une pression de suralimentation de l'air d'admission est inférieure ou égale à une pression de suralimentation prédéterminée; le débit d'air du compresseur centrifuge (26a) est supérieur ou égal à un débit d'air prédéterminé; et une vitesse de moteur est supérieure ou égale à une vitesse de moteur prédéterminée.

**11.** Procédé de commande d'un moteur à combustion interne (10) ayant un compresseur centrifuge (26a), un passage de dérivation (28) qui relie par communication un passage d'entrée et un passage de sortie du compresseur centrifuge (26a), et une soupape de dérivation (30) qui ouvre et ferme le passage de dérivation (28) selon l'une quelconque des revendications 7 à 10, comprenant en plus le fait de:

augmenter un degré d'ouverture de la soupape de dérivation (30) à mesure que le différentiel de deuxième ordre calculé augmente, lorsque l'on détermine qu'une surpression se produit.

**12.** Procédé pour commander un moteur à combustion interne (10) ayant un compresseur centrifuge (26a), un passage de dérivation (28) qui relie par communication un passage d'entrée et un passage de sortie du compresseur centrifuge (26a), et une soupape de dérivation (30) qui ouvre et ferme le passage de dérivation (28) selon l'une quelconque des revendications 7 à 10, comprenant en plus le fait de :

ouvrir une soupape de dérivation (30) pendant plus de temps à mesure que le différentiel de deuxième ordre calculé augmente, lorsque l'on détermine qu'une surpression se produit.

FIG. 1

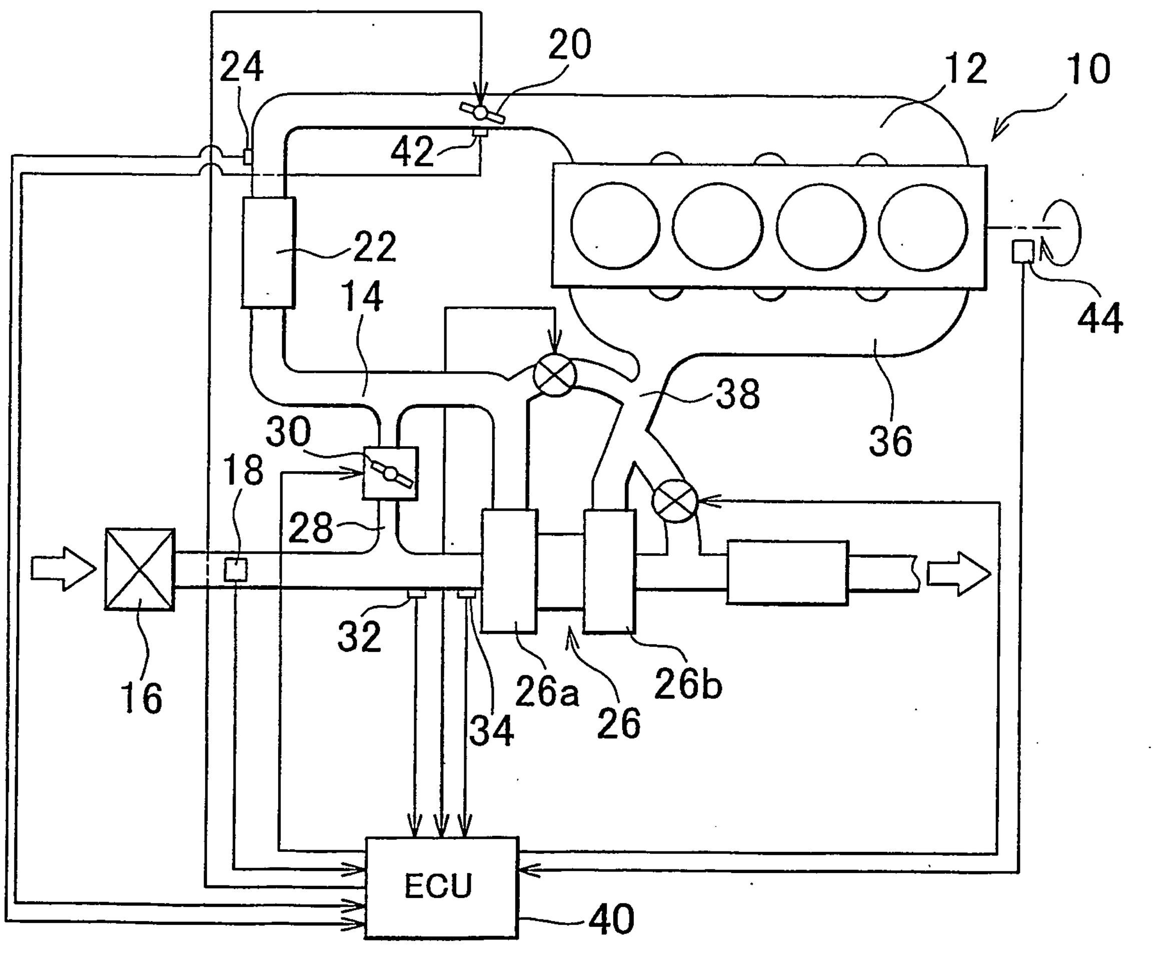

FIG. 2

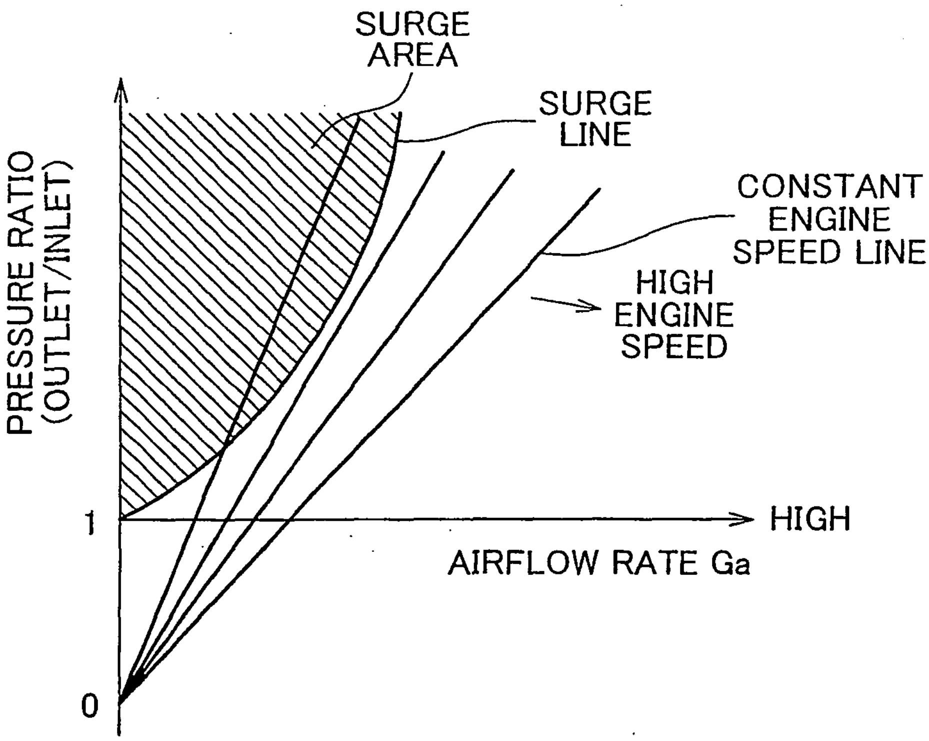
SURGE AREA
SURGE LINE
PRESSURE RATIO (OUTLET/INLET)
CONSTANT ENGINE SPEED LINE
HIGH ENGINE SPEED
1
HIGH
AIRFLOW RATE Ga
0

FIG. 3A

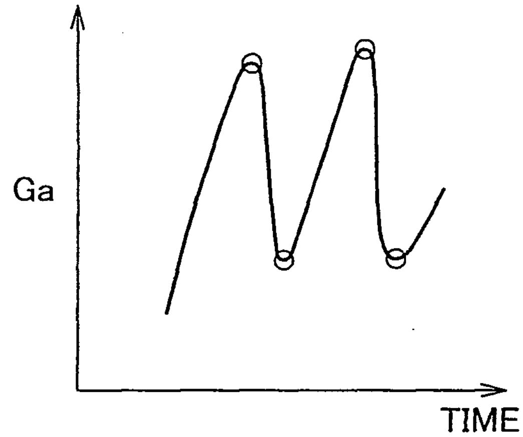


FIG. 3B

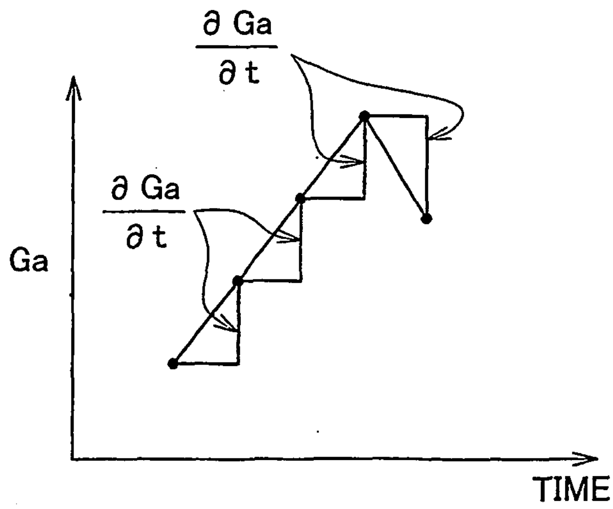

FIG. 4

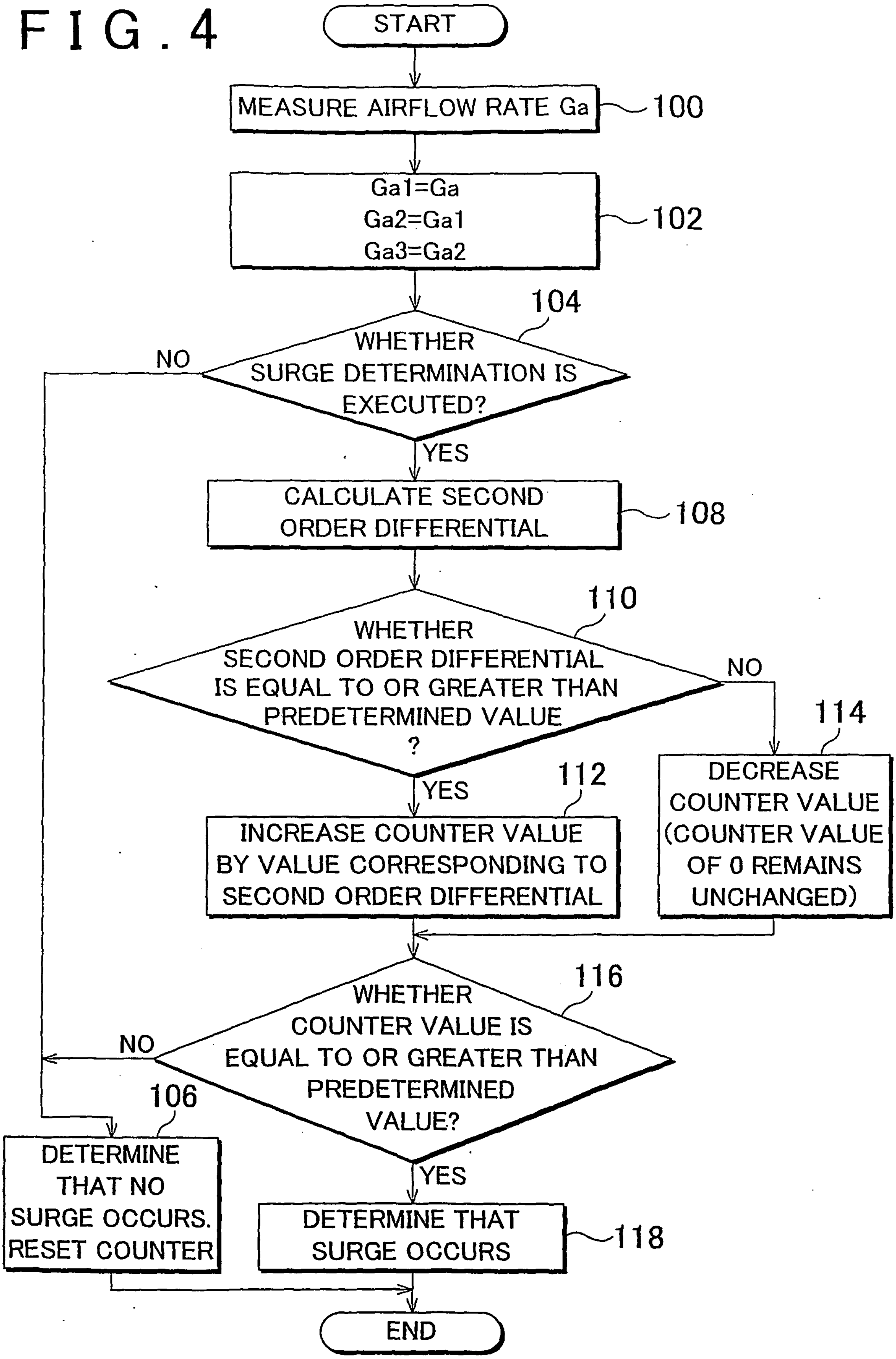
START
MEASURE AIRFLOW RATE Ga
100
Ga1=Ga
Ga2=Ga1
Ga3=Ga2
102
104
WHETHER SURGE DETERMINATION IS EXECUTED?
NO
YES
CALCULATE SECOND ORDER DIFFERENTIAL
108
110
WHETHER SECOND ORDER DIFFERENTIAL IS EQUAL TO OR GREATER THAN PREDETERMINED VALUE ?
NO
YES
114
DECREASE COUNTER VALUE (COUNTER VALUE OF 0 REMAINS UNCHANGED)
112
INCREASE COUNTER VALUE BY VALUE CORRESPONDING TO SECOND ORDER DIFFERENTIAL
116
WHETHER COUNTER VALUE IS EQUAL TO OR GREATER THAN PREDETERMINED VALUE?
NO
YES
106
DETERMINE THAT NO SURGE OCCURS. RESET COUNTER
DETERMINE THAT SURGE OCCURS
118
END

FIG. 5

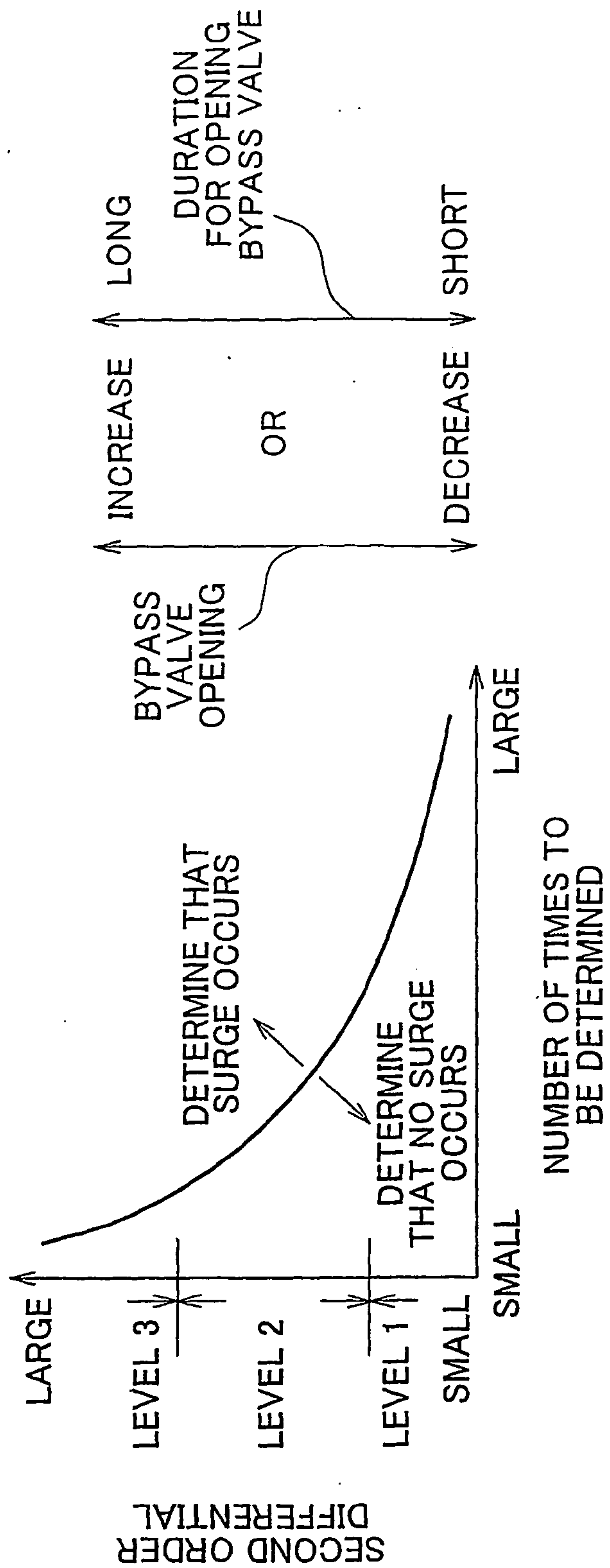
SECOND ORDER DIFFERENTIAL
LARGE
LEVEL 3
LEVEL 2
LEVEL 1
SMALL
DETERMINE THAT SURGE OCCURS
DETERMINE THAT NO SURGE OCCURS
SMALL
LARGE
NUMBER OF TIMES TO BE DETERMINED
BYPASS VALVE OPENING
INCREASE
OR
DECREASE
LONG
SHORT
DURATION FOR OPENING BYPASS VALVE

FIG. 6

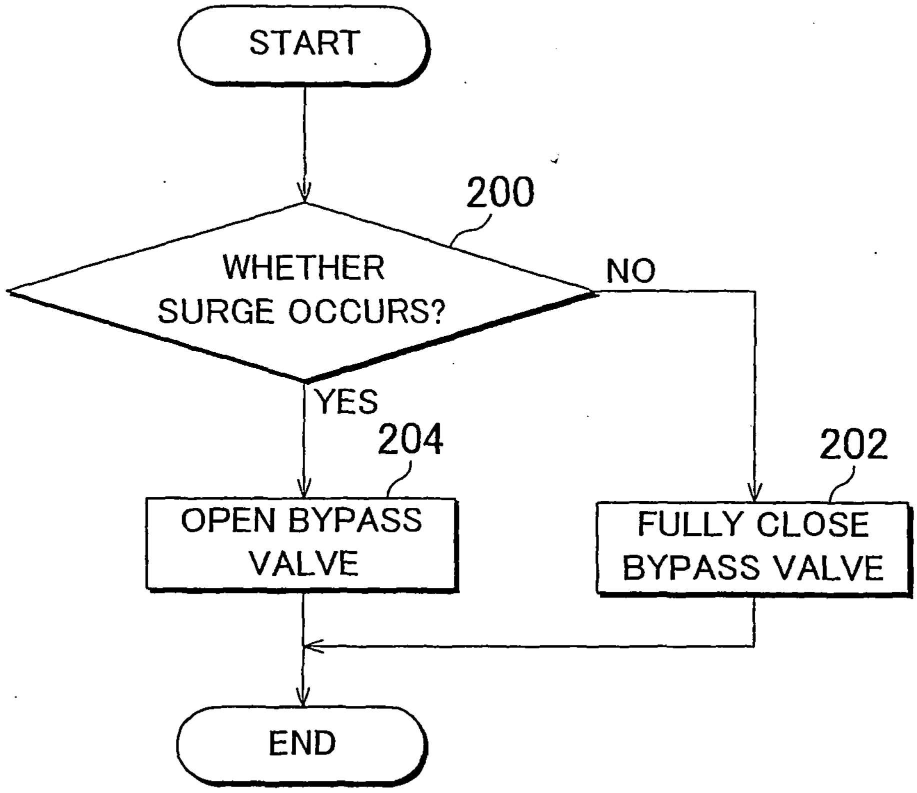
START
200
WHETHER
SURGE OCCURS?
NO
YES
204
OPEN BYPASS
VALVE
202
FULLY CLOSE
BYPASS VALVE
END

FIG. 7A

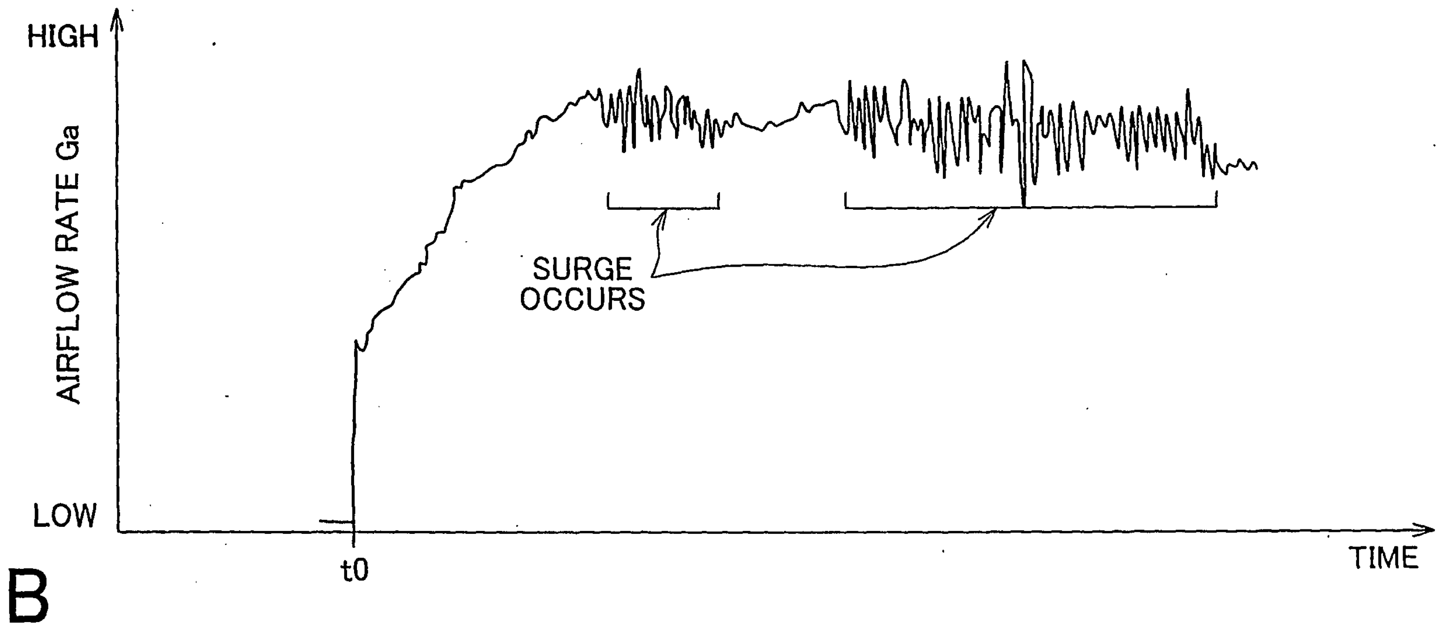
HIGH
AIRFLOW RATE Ga
LOW
SURGE OCCURS
t0
TIME

FIG. 7B

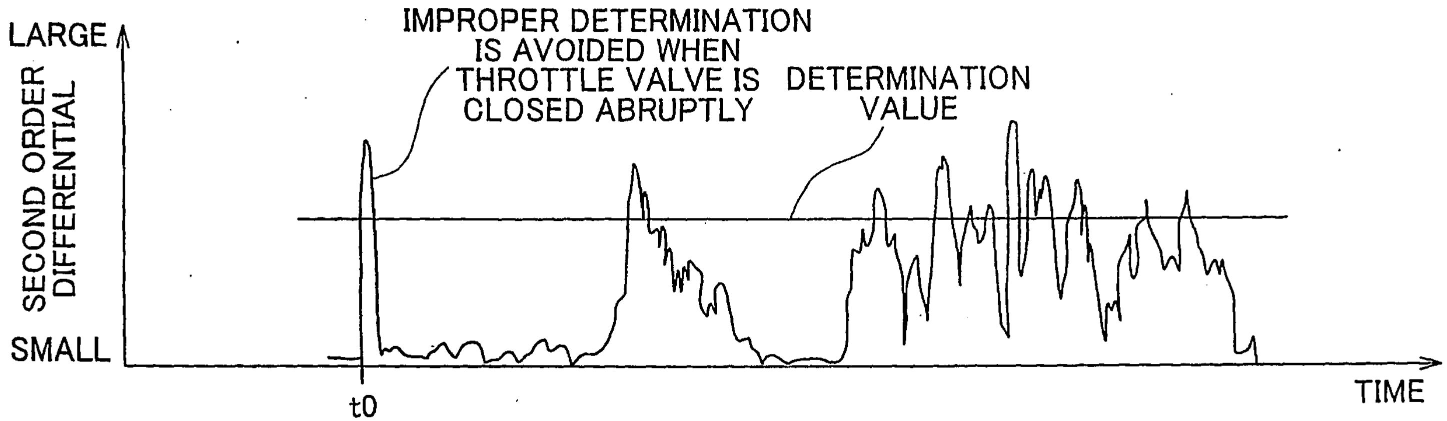
LARGE
SECOND ORDER DIFFERENTIAL
SMALL
IMPROPER DETERMINATION IS AVOIDED WHEN THROTTLE VALVE IS CLOSED ABRUPTLY
DETERMINATION VALUE
t0
TIME

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005240683 A